# EUROPÄISCHE PATENTANMELDUNG

(11) **EP 2 210 821 A1**
(43) Veröffentlichungstag der Anmeldung: **28.07.2010**
(21) Anmeldenummer: 09151080.0
(22) Anmeldetag: 22.01.2009
(51) Int. Cl.: B65D 73/00, A45C 11/18, G11B 33/04

(54) **Aufbewahrungsvorrichtung für digitale Speichermedien**

(71) Anmelder: Ernst Schausberger & Co. Gesellschaft m.b.H., 4623 Gunskirchen (AT)
(72) Erfinder: Prause, Philipp, 1140 Wien (AT)
(74) Vertreter: Hofstetter, Alfons J.

(57) **Zusammenfassung**

Die vorliegende Erfindung betrifft eine Aufbewahrungsvorrichtung für digitale Speichermedien aus Karton, Papier, Kunststoff oder vergleichbaren Materialien, insbesondere für digitale Speichermedien wie so genannte Flash-Datenträger, MemorySticks, SIM-Karten, Compactdisks (CDs), DVDs, BlueRay-Disks und andere, mit einem flächig ausgebildeten Aufbewahrungskörper (44) und mindestens einer im Aufbewahrungskörper (44) ausgebildeten Vertiefung (46) zur Aufnahme und Aufbewahrung des digitalen Speichermediums (42). Dabei ist im Aufbewahrungskörper (44) mindestens eine Knicklinie (48) ausgebildet, wobei die Knicklinie (48) durch die mindestens eine im Aufbewahrungskörper (44) ausgebildete Vertiefung (46) verläuft und die Vertiefung (46) zumindest teilweise von mindestens einem Rückhalteelement (28) überdeckt ist.

## Beschreibung

Die vorliegende Erfindung betrifft eine Aufbewahrungsvorrichtung für digitale Speichermedien aus Karton, Papier, Kunststoff oder vergleichbaren Materialien, insbesondere für digitale Speichermedien wie so genannte Flash-Datenträger, MemorySticks, SIM-Karten, Compactdisks (CDs), DVDs, BlueRay-Disks und andere, mit einem flächig ausgebildeten Aufbewahrungskörper und mindestens einer im Aufbewahrungskörper ausgebildeten Vertiefung zur Aufnahme und Aufbewahrung des digitalen Speichermediums.

Derartige Aufbewahrungsvorrichtung sind zum Beispiel aus der DE 20 2006 001 095 U1 bekannt. Dabei wird eine Verpackungsschachtel für Speicherkarten bestehend aus mindestens zwei Schichten Karton offenbart, wobei eine Unterseite an einer Ecke einer der Kartone mit einer Senke zur Aufnahme der Speicherkarte versehen ist. Über der Senke ist in dem entsprechenden Ende des oberen Kartons ein Sichtfenster mit einem transparenten perspektivischen Plättchen angeordnet. Beim Zusammensetzen der Kartone wird mittels der Senke ein Raum zum Aufbewahren der Speicherkarte gebildet. Die WO 2008/083135 A1 offenbart eine Aufbewahrungsvorrichtung für digitale Speichermedien bestehend aus einem kartenähnlichen Grundelement aus Karton und mindestens einer daran angeordneten transparenten Aufnahmetasche für digitale Speichermedien. Nachteilig an diesen bekannten Aufbewahrungsvorrichtungen sind jedoch einerseits die vollflächige Überdeckung der aufzubewahrenden Speicherkarte und die damit verbundenen Probleme bei einem Einbringen oder Entnehmen der Speicherkarte aus der Aufbewahrungsvorrichtung. Zudem sind die bekannten Lösungen konstruktiv aufwändig und daher relativ teuer - insbesondere bei einer Massenfertigung - herzustellen. Zudem besteht bei Aufbewahrungsvorrichtungen mit von einem Grundelement abstehenden Aufnahmetaschen die Gefahr eines unbeabsichtigten Herausfallens und/oder Beschädigung des Speichermediums.

Es ist daher die Aufgabe der vorliegenden Erfindung eine Aufbewahrungsvorrichtung für digitale Speichermedien aus Karton, Papier, Kunststoff oder vergleichbaren Materialien der eingangs genannten Art bereitzustellen, die einerseits kostengünstig herstellbar ist und andererseits eine sichere Aufbewahrung und eine einfache Entnahme des Speichermediums gewährleistet.

Zur Lösung dieser Aufgabe dient eine Aufbewahrungsvorrichtung für digitale Speichermedien gemäß den Merkmalen des Anspruchs 1.

Vorteilhafte Ausgestaltungen sind in den jeweiligen Unteransprüchen beschrieben.

Eine erfindungsgemäße Aufbewahrungsvorrichtung für digitale Speichermedien besteht aus Karton, Papier, Kunststoff oder vergleichbaren Materialien, und dient insbesondere zur Aufbewahrung von digitalen Speichermedien wie so genannten Flash-Datenträgern, MemorySticks, SIM-Karten, Compactdisks (CDs), DVDs, BlueRay-Disks und anderen digitalen Speichermedien. Die erfindungsgemäße Aufbewahrungsvorrichtung umfasst dabei einen flächig ausgebildeten Aufbewahrungskörper und mindestens eine im Aufbewahrungskörper ausgebildete Vertiefung zur Aufnahme und Aufbewahrung des digitalen Speichermediums. Dabei ist im Aufbewahrungskörper mindestens eine Knicklinie ausgebildet, wobei die Knicklinie durch die mindestens eine im Aufbewahrungskörper ausgebildete Vertiefung verläuft. Die Vertiefung ist zudem zumindest teilweise von mindestens einem Rückhalteelement überdeckt. Dadurch ist es vorteilhafterweise möglich, einen Teilbereich des Aufbewahrungskörpers abzuknicken, wobei ein entsprechender Teilbereich des Speichermediums freigelegt wird. Mittels des freigelegten Teilbereichs des Speichermediums ist eine einfache und sichere Entnahme des Speichermediums aus dem Aufbewahrungskörper beziehungsweise der entsprechenden Vertiefung gewährleistet. Das Rückhalteelement kann zudem kostengünstig hergestellt werden, wobei es entweder einstückig mit dem Aufbewahrungskörper oder als separates Element ausgebildet ist. Des Weiteren gewährleistet das Rückhalteelement eine sichere Aufbewahrung des Speichermediums innerhalb der erfindungsgemäßen Aufbewahrungsvorrichtung.

In einer vorteilhaften Ausgestaltung der erfindungsgemäßen Aufbewahrungsvorrichtung ist das Rückhalteelement spangen- oder stegartig ausgebildet. Durch die spangen- oder stegartige Ausbildung des Rückhalteelements kann auf die Ausbildung einer vollflächigen Überdeckung des Speichermediums oder auf die Ausbildung von separaten Taschen vorteilhafterweise verzichtet werden. Die spangen- oder stegartigen Rückhalteelemente können ebenfalls kostengünstig hergestellt werden, wobei diese entweder einstückig mit dem Aufbewahrungskörper oder als separate Elemente ausgebildet sind. Des Weiteren gewährleistet ein derartiges Rückhalteelement eine einfache Entnahme wie auch ein einfaches Einbringen des Speichermediums in die Vertiefung des Aufbewahrungskörpers, da die entsprechende Vertiefung nur teilweise von dem spangen- oder stegartigen Rückhalteelement überdeckt ist und somit ein genügend großer Eingriffsraum für den Benutzer verbleibt.

In einer weiteren vorteilhaften Ausgestaltung der erfindungsgemäßen Aufbewahrungsvorrichtung verläuft das Rückhalteelement von mindestens einem ersten Rand der Vertiefung zu mindestens einem angrenzenden und/oder gegenüberliegenden Seitenrand der Vertiefung. Je nach Anforderungen kann der Verlauf des Rückhalteelements variiert werden. Insbesondere können hierbei die Form und die Größe des aufzubewahrenden digitalen Speichermediums berücksichtigt werden. Zudem besteht die Möglichkeit, dass das Rückhalteelement bogen-, wellen-, V- oder zickzackförmig ausgebildet ist. Durch diese Maßnahmen ergeben sich optimal ausgestaltete Eingriffsräume, die den Bedienkomfort bei einem Einstecken oder einer Entnahme des Speichermediums deutlich erhöhen. In weiteren vorteilhaften Ausgestaltungen der erfindungsgemäßen Aufbe-wahrungsvorrichtung kann das Rückhalteelement an mindestens einem an die Vertiefung angrenzenden Bereich mindestens eine, die Kontur des Rückhalte-elements ausbildende und verlängernde Schnittlinie in dem Aufbewahrungskörper aufweisen. Zudem ist es möglich, dass in dem Aufbewahrungskörper mindestens eine die Kontur des Rückhalteelements zumindest teilweise umfassende und davon beabstandete Schnittlinie ausgebildet ist. Des Weiteren besteht die Möglichkeit, dass in dem Aufbewahrungskörper mindestens eine in den Körper des Rückhalteelements ragende Schnittlinie ausgebildet ist. Durch diese Maßnahmen wird die Elastizität des Rückhalteelements deutlich erhöht, wodurch einerseits die Entnahme des Speichermediums aus der entsprechenden Vertiefung erleichtert wird und andererseits ein sicherer Halt des Speichermediums innerhalb der Vertiefung gewährleistet ist.

In einer weiteren vorteilhaften Ausgestaltung der erfindungsgemäßen Aufbewahrungsvorrichtung entspricht die Kontur der Vertiefung der Außenkontur des aufzunehmenden Speichermediums. Auch diese Maßnahme trägt zu einer sicheren Halterung des digitalen Speichermediums in der Vertiefung der Aufbewahrungsvorrichtung bei.

In weiteren vorteilhaften Ausgestaltungen der erfindungsgemäßen Aufbewahrungsvorrichtung ist der Aufbewahrungskörper mehrschichtig ausgebildet. Dadurch ist es vorteilhafterweise möglich, Vertiefungen unterschiedlicher Tiefe in Abstimmung mit dem aufzunehmenden Speichermedium einfach herzustellen. Dabei umfasst üblicherweise der Aufbewahrungskörper mindestens ein flächig ausgebildetes Bodenelement und ein flächig ausgebildetes Deckelement, wobei im Deckelement mindestens eine Ausnehmung zur Ausbildung der entsprechenden Vertiefung zur Aufnahme und Aufbewahrung des digitalen Speichermediums und das mindestens eine Rückhalteelement ausgebildet sind. Es ist aber auch möglich, dass zwischen dem Deckelement und dem Bodenelement mindestens ein flächig ausgebildetes Zwischenelement zu liegen kommt. In diesem Fall ist auch in dem Zwischenelement mindestens eine Ausnehmung zur Ausbildung der entsprechenden Vertiefung zur Aufnahme und Aufbewahrung des digitalen Speichermediums ausgebildet, wobei die Position dieser Ausnehmung der Position der Ausnehmung in dem Deckelement entspricht. Dabei kann die Form und Größe der Ausnehmung in dem Zwischenelement der Form und Größe der Ausnehmung in dem Deckelement entsprechen. Es ist aber auch möglich, dass die Ausnehmung in dem Zwischenelement größer ausgebildet ist als die Ausnehmung in dem Deckelement. Bei der letztgenannten Ausführungsform besteht die Möglichkeit, dass Ungenauigkeiten beim Zusammenfügen der Elemente des mehrschichtig aufgebauten Aufbewahrungs-körpers ausgeglichen werden können. Des Weiteren besteht die Möglichkeit, dass das Zwischenelement ein erstes Teilelement und ein zweites Teilelement umfasst, wobei im ersten und zweiten Teilelement jeweils mindestens eine Teilöffnung zur Ausbildung der entsprechenden Ausnehmung zur Ausbildung der Vertiefung ausgebildet ist und das erste von dem zweiten Teilelement beabstandet angeordnet ist, derart, dass zwischen den Teilelementen ein Spalt ausgebildet ist. Die Ausgestaltung des Spaltes erlaubt es dem Material der anderen Schichten, insbesondere dem Boden- und Deckelement, beim Knicken beziehungsweise Umklappen eine gewisse Deformierung oder Wulstbildung auszuführen. Dies erleichtert den Klapp- beziehungsweise Knickvorgang. Zudem können in dem Deckelement und/oder dem Bodenelement jeweils mindestens eine Knicklinie zur Ausbildung der Knicklinie des Aufbewahrungskörpers ausgebildet sein, wobei der in dem Zwischenelement ausgebildete Spalt derart angeordnet ist, dass die in dem Deckelement und/oder dem Bodenelement ausgebildete Knicklinie im Bereich des Spalts verlaufen. Dadurch ist ein einfaches Klappen beziehungsweise Knicken des aus mehreren Schichten aufgebauten Aufbewahrungskörpers möglich.

In weiteren vorteilhaften Ausgestaltungen der erfindungsgemäßen Aufbewahrungsvorrichtung ist im Bereich der Vertiefung mindestens eine Durchgriffsöffnung und/oder mindestens eine Ausstanzung ausgebildet. Die Durchgriffsöffnung und/oder die Ausstanzung ist dabei im Bodenbereich beziehungsweise im Bodenelement ausgebildet und erleichtert die Herausnahme des sich in der Vertiefung befindlichen Speichermediums. Zudem besteht die Möglichkeit, dass die Vertiefung mindestens eine Eingriffsöffnung umfasst. Durch die Eingriffsöffnung wird die Herausnahme wie auch das Einfügen des digitalen Speichermediums in die Vertiefung erleichtert. Im Falle der mehrschichtigen Ausgestaltung des Aufbewahrungskörpers der Aufbewahrungsvorrichtung umfasst die Ausnehmung in dem Deckelement und/oder die Ausnehmung in dem Zwischenelement mindestens eine Eingriffsöffnung.

In einer weiteren vorteilhaften Ausgestaltung der erfindungsgemäßen Aufbewahrungsvorrichtung weist die Aufbewahrungsvorrichtung die Form und Größe einer handelsüblichen Kreditkarte auf.

Weitere Einzelheiten, Merkmale und Vorteile der Erfindung ergeben sich aus den in den Figuren dargestellten Ausführungsbeispielen. Es zeigen
- Figur 1: eine schematische Darstellung einer Aufbewahrungsvorrichtung für Speichermedien gemäß einer ersten Ausführungsform;
- Figur 2: eine schematische Darstellung der Aufbewahrungsvorrichtung für Speichermedien gemäß Figur 1 in geknicktem Zustand;
- Figuren 3a - 3c: eine schematische Darstellung des mehrschichtigen Aufbaus der Aufbewahrungsvorrichtung für Speichermedien gemäß Figur 1;
- Figur 4: eine schematische Darstellung eines Rückhalteelements einer Aufbewahrungsvorrichtung für Speichermedien gemäß einer zweiten Ausführungsform;
- Figur 5: eine schematische Darstellung eines Rückhalteelements einer Aufbewahrungsvorrichtung für Speichermedien gemäß einer dritten Ausführungsform; und
- Figur 6: eine schematische Darstellung eines Rückhalteelements einer Aufbewahrungsvorrichtung für Speichermedien gemäß einer vierten Ausführungsform.

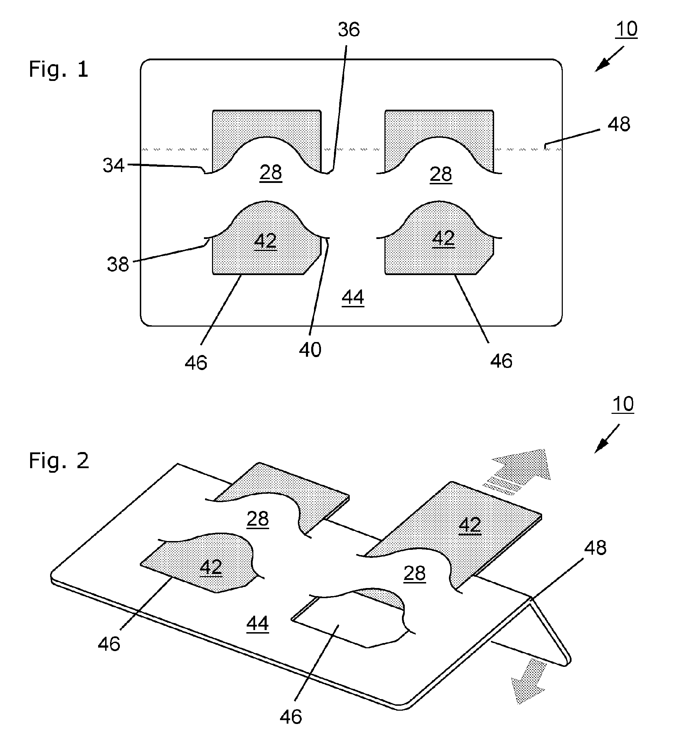

Die Figur 1 zeigt eine schematische Darstellung einer Aufbewahrungsvorrichtung 10 für Speichermedien 42 gemäß einer ersten Ausführungsform. Die Aufbewahrungsvorrichtung 10 besteht dabei aus Karton, Papier, Kunststoff oder vergleichbaren Materialien und ist insbesondere zur Aufbewahrung von so genannten Flash-Datenträgern, MemorySticks, SIM-Karten, Compactdisks (CDs), DVDs, BlueRay-Disks und anderen digitalen Speichermedien verwendbar. Die Aufbewahrungsvorrichtung 10 umfasst dabei einen flächig ausgebildeten Aufbewahrungskörper 44, der in dem dargestellten Beispiel die Form und Größe einer handelsüblichen Kreditkarte aufweist. Es ist aber auch möglich, dass die Aufbewahrungsvorrichtung großflächiger ausgebildet ist (z.B. DIN A4 oder DIN A5) und mit einem Deckblatt zur Ausbildung einer Klappkarte verbunden ist (nicht dargestellt). Zudem kann diese Aufbewahrungsvorrichtung mindestens eine Vertiefung aufweisen, die eine weitere erfindungsgemäße Aufbewahrungsvorrichtung, insbesondere in Form und Größe einer Kreditkarte aufnimmt. Auch weitere Ausgestaltungsmöglichkeiten der Aufbewahrungsvorrichtung sind denkbar. So kann die Aufbewahrungsvorrichtung auch beispielsweise als Sammelkarte oder - beileger für Heftordner, als Gruß- oder Glückwunschkarte oder als Präsentations- und Verkaufskarte ausgebildet sein (nicht dargestellt).

Man erkennt, dass in dem Aufbewahrungskörper 44 zwei Vertiefungen 46 zur Aufnahme und Aufbewahrung der digitalen Speichermedien 42 ausgebildet sind. In dem dargestellten Ausführungsbeispiel handelt es sich bei den digitalen Speichermedien 42 um so genannte SD-Karten. Die Vertiefungen 46 sind dabei jeweils teilweise von einem spangenartig ausgebildeten Rückhalteelement 28 überdeckt. Dabei verläuft das Rückhalteelement 28 jeweils von mindestens einem ersten Rand der Vertiefung 46 zu mindestens einem gegenüberliegenden zweiten Rand der Vertiefung 46. Zudem ist das Rückhalteelement 28 einstückig mit dem Aufbewahrungskörper 44 ausgebildet. Des Weiteren erkennt man, dass die wellenartig ausgebildeten Rückhalteelemente 28 an den an die Vertiefung 46 angrenzenden Bereichen jeweils zwei, die Kontur des Rückhalteelements 28 ausbildende und verlängernde Schnittlinien 34, 36, 38, 40 in dem Aufbewahrungskörper aufweisen. Durch die in dem Aufbewahrungskörper 44 ausgebildeten Schnittlinien 34, 36, 38, 40 wird die Elastizität der Rückhalteelemente 28 erhöht.

Zudem ist in dem Aufbewahrungskörper 44 eine Knicklinie 48 ausgebildet, wobei die Knicklinie 48 durch die beiden im Aufbewahrungskörper 44 ausgebildeten Vertiefungen 46 verläuft. In Figur 2 ist die Aufbewahrungsvorrichtung 10 gemäß Figur 1 in geknicktem Zustand dargestellt. Man erkennt, dass durch das Herunterklappen beziehungsweise Knicken eines Teilbereichs des Aufbewahrungskörpers 44 entlang der Knicklinie 48 ein Teilbereich der Speichermedien 42 freigelegt wird, wodurch sich die Möglichkeit einer leichten Herausnahme der Speichermedien 42 aus den Vertiefungen 46 ergibt. Des Weiteren erkennt man, dass die Kontur der Vertiefung 46 der Außenkontur des aufzunehmenden Speichermediums 42 entspricht. Der Aufbewahrungskörper 44 kann massiv ausgebildet sein. Es ist aber auch möglich, dass der Aufbewahrungskörper 44 mehrschichtig ausgebildet ist.

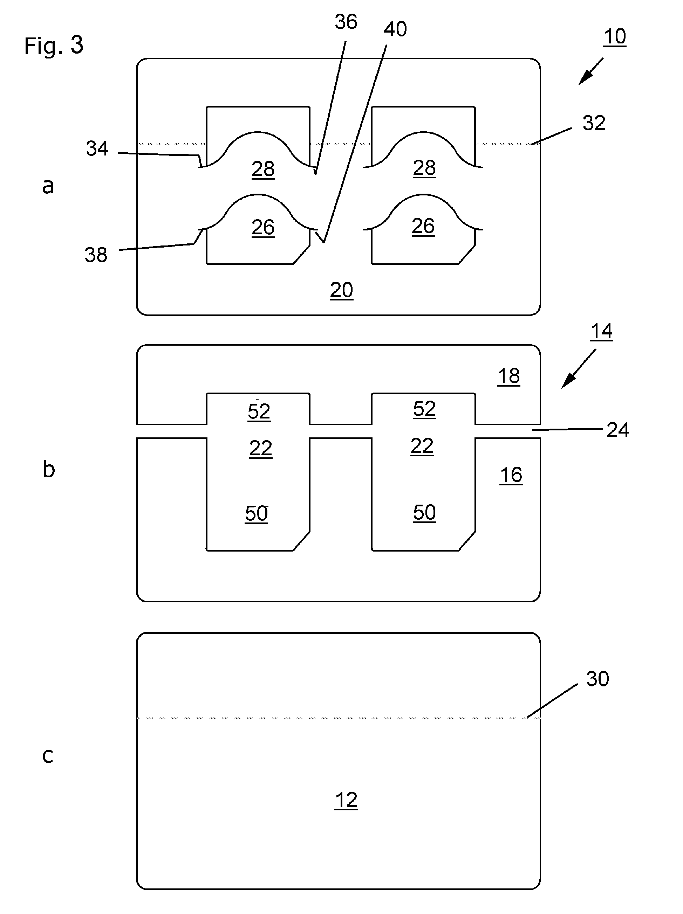

In den Figuren 3a bis 3c ist ein mehrschichtiger Aufbau der Aufbewahrungsvorrichtung 10 gemäß den Figuren 1 und 2 schematisch dargestellt. Man erkennt den dreischichtigen Aufbau der Aufbewahrungsvorrichtung 10 beziehungsweise des Aufbewahrungskörpers 44. Figur 3a zeigt dabei ein Deckelement 20, Figur 3b ein Zwischenelement 14 und Figur 3c ein Bodenelement 12 des Aufbewahrungs-körpers 44. Das Deckelement 20 umfasst dabei zwei Ausnehmungen 26 zur Ausbildung der entsprechenden Vertiefung 46 zur Aufnahme und Aufbewahrung der digitalen Speichermedien 42. In dem Zwischenelement 14 sind ebenfalls Ausnehmungen 22 zur Ausbildung der entsprechenden Vertiefungen 46 zur Aufnahme und Aufbewahrung der digitalen Speichermedien 42 ausgebildet, wobei die Position der Ausnehmungen 22 der Position der Ausnehmungen 26 in dem Deckelement 20 entspricht. In dem dargestellten Ausführungsbeispiel entspricht die Form und Größe der Ausnehmungen 22 in dem Zwischenelement 14 der Form und Größe der Ausnehmungen 26 in dem Deckelement 20. Des Weiteren wird deutlich, dass das Zwischenelement 14 ein erstes Teilelement 16 und ein zweites Teilelement 18 umfasst. Dabei sind im ersten und zweiten Teilelement 16, 18 jeweils zwei Teilöffnungen 50, 52 zur Ausbildung der jeweiligen Ausnehmungen 22 zur Ausbildung der Vertiefungen 46 ausgebildet. Man erkennt, dass das erste Teilelement 16 von dem zweiten Teilelement 18 beabstandet angeordnet ist, derart, dass zwischen den Teilelementen 16, 18 ein Spalt 24 ausgebildet wird.

Zur Ausbildung der Knicklinie 48 sind in dem Deckelement 20 und dem Bodenelement 12 jeweils eine entsprechende Knicklinie 32, 30 ausgebildet, wobei die Knicklinien 32, 30 derart ausgebildet sind, dass sie in montiertem Zustand der Aufbewahrungsvorrichtung 10 im Bereich des Spalts 24 verlaufen. Durch die Ausbildung des Spalts 24 wird das Abklappen beziehungsweise Abknicken entlang der Knicklinie 48 beziehungsweise der Knicklinien 30, 32 deutlich erleichtert. Die Rückhalteelemente 28 sind in dem Deckelement 20 ausgebildet, insbesondere einstückig mit dem Deckelement 20 verbunden. Man erkennt wiederum die Verlängerung der Kontur der Rückhalteelemente 28 in den Bereich des Deckelements 20 beziehungsweise des Aufbewahrungskörpers 44 mittels der Schnittlinien 34, 36, 38, 40.

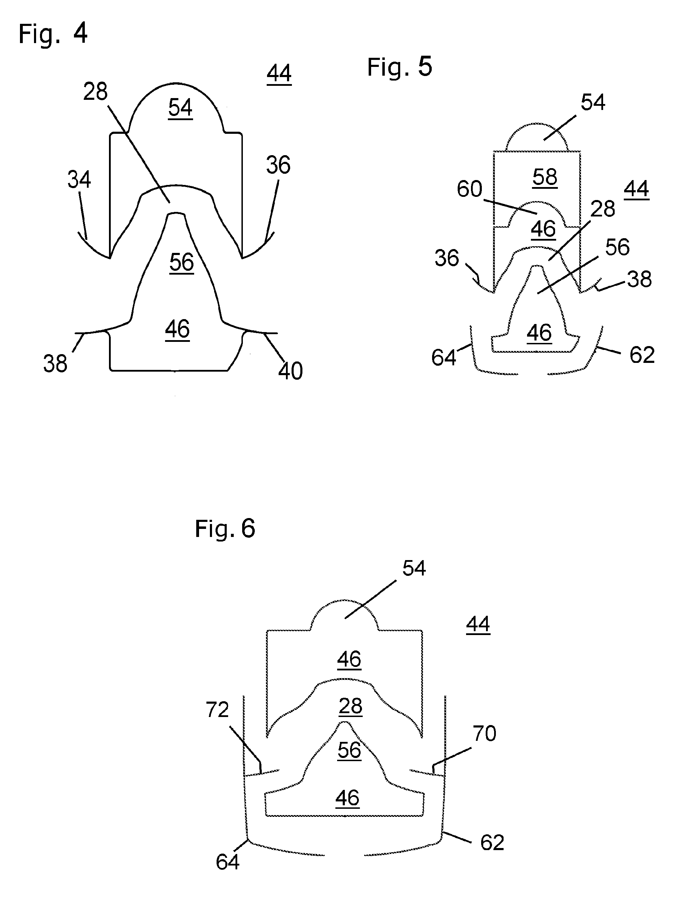

In den Figuren 4 bis 6 sind jeweils unterschiedliche Ausgestaltungen des Rückhalteelements 28 schematisch dargestellt. So zeigt Figur 4 eine zickzackförmige Ausgestaltung des Rückhalteelements 28. Durch die zickzackförmige Ausgestaltung wird unterhalb des Rückhalteelements 28 ein zusätzlicher Freiraum 56 gebildet, der als zusätzliche Eingriffsöffnung die Positionierung wie auch die Herausnahme eines entsprechenden Speichermediums in oder aus der Vertiefung 46 erleichtert. Die in den Aufbewahrungskörper 44 beziehungsweise in ein mögliches Deckelement 20 hineinragenden Schnittlinien 34, 36, 38, 40 unterstützen die zickzackförmige Ausgestaltung des Rückhalteelements 28. Zudem ergibt sich dadurch eine hohe Elastizität des Rückhalteelements 28. Des Weiteren erkennt man, dass die Vertiefung 46 zudem eine zusätzliche Eingriffsöffnung 54 aufweist. In dem in Figur 5 dargestellten Ausführungsbeispiel ist das Rückhalteelement 28 ebenfalls zickzackförmig ausgestaltet. Allerdings wird hier die Kontur des Rückhalteelements 28 durch zusätzliche, die Kontur des Rückhalteelements teilweise umfassende und davon beabstandete Schnittlinien 62, 64 ausgebildet. Die Schnittlinien 62, 64 wie auch die wiederum ausgebildeten Schnittlinien 36, 38 sind in dem Aufbewahrungskörper 44 beziehungsweise gegebenenfalls einem entsprechenden Deckelement 20 ausgebildet. Die Schnittlinien 62, 64 umgeben zudem zumindest teilweise einen Bereich der Vertiefung 46. Innerhalb der Vertiefung 46 ist in dem dargestellten Ausführungsbeispiel ein Distanzstück 58 angeordnet. Mittels des Distanzstücks 58 kann die Vertiefung 46 auf unterschiedlich große Speichermedien angepasst werden. Zur Vereinfachung der Entnahme des entsprechend in der Vertiefung 46 angeordneten Speichermediums weist das Distanzstück 58 ebenfalls eine Eingriffsöffnung 60 auf. Das Rückhalteelement 28 gemäß dem in Figur 6 dargestellten Ausführungsbeispiel ist eher V-förmig ausgebildet. Man erkennt, dass ausgehend von dem Aufbewahrungskörper 44 beziehungsweise eines möglichen Deckelements 20 jeweils eine in den Körper des Rückhalteelements 28 ragende Schnittlinie 70, 72 ausgebildet ist. Zudem kreuzen die Schnittlinien 70, 72 die ebenfalls im Aufbewahrungskörper 44 beziehungsweise dem Deckelement 20 ausgebildeten Schnittlinien 62, 64, die die Kontur des Rückhalteelements 28 und die Kontur der Vertiefung 46 zumindest teilweise umgeben. Eine derartige Ausgestaltung der Schnittlinien 62, 64, 70, 72 erhöht die Elastizität des Rückhalteelements 28 und verstärkt die Rückhaltefunktion dieses Elements. Durch die V-förmige Ausgestaltung des Rückhalteelements 28 ergibt sich wiederum ein Freiraum 56 unterhalb des Rückhalteelements 28 zur vereinfachten Entnahme eines Speichermediums aus der Vertiefung 46.

## Patentansprüche

1. Aufbewahrungsvorrichtung für digitale Speichermedien aus Karton, Papier, Kunststoff oder vergleichbaren Materialien, insbesondere für digitale Speichermedien wie so genannte Flash-Datenträger, MemorySticks, SIM-Karten, Compactdisks (CDs), DVDs, BlueRay-Disks und andere, mit einem flächig ausgebildeten Aufbewahrungskörper (44) und mindestens einer im Aufbewahrungskörper (44) ausgebildeten Vertiefung (46) zur Aufnahme und Aufbewahrung des digitalen Speichermediums (42),
**dadurch gekennzeichnet,**
**dass** im Aufbewahrungskörper (44) mindestens eine Knicklinie (48) ausgebildet ist, wobei die Knicklinie (48) durch die mindestens eine im Aufbewahrungskörper (44) ausgebildete Vertiefung (46) verläuft und die Vertiefung (46) zumindest teilweise von mindestens einem Rückhalteelement (28) überdeckt ist.

2. Aufbewahrungsvorrichtung nach Anspruch 1,
**dadurch gekennzeichnet,**
**dass** das Rückhalteelement (28) spangen- oder stegartig ausgebildet ist.

3. Aufbewahrungsvorrichtung nach Anspruch 2,
**dadurch gekennzeichnet,**
**dass** das Rückhalteelement (28) von mindestens einem ersten Rand der Vertiefung (46) zu mindestens einem angrenzenden und/oder gegenüberliegenden zweiten Rand der Vertiefung (46) verläuft.

4. Aufbewahrungsvorrichtung nach Anspruch 2 oder 3,
**dadurch gekennzeichnet,**
**dass** das Rückhalteelement (28) einstückig mit dem Aufbewahrungskörper (44) oder als separates Element ausgebildet ist.

5. Aufbewahrungsvorrichtung nach einem der Ansprüche 2 bis 4,
**dadurch gekennzeichnet,**
**dass** das Rückhalteelement (28) bogen-, wellen-, V- oder zickzackförmig ausgebildet ist.

6. Aufbewahrungsvorrichtung nach einem der vorhergehenden Ansprüche,
**dadurch gekennzeichnet,**
**dass** die Kontur der Vertiefung (46) der Außenkontur des aufzunehmenden Speichermediums (42) entspricht.

7. Aufbewahrungsvorrichtung nach einem der vorhergehenden Ansprüche,
**dadurch gekennzeichnet,**
**dass** der Aufbewahrungskörper (44) mehrschichtig ausgebildet ist.

8. Aufbewahrungsvorrichtung nach Anspruch 7,
**dadurch gekennzeichnet,**
**dass** der Aufbewahrungskörper (44) mindestens ein flächig ausgebildetes Bodenelement (12) und ein flächig ausgebildetes Deckelement (20) umfasst, wobei im Deckelement (20) mindestens eine Ausnehmung (26) zur Ausbildung der entsprechenden Vertiefung (46) zur Aufnahme und Aufbewahrung des digitalen Speichermediums (42) und das mindestens eine Rückhalteelement (28) ausgebildet ist.

9. Aufbewahrungsvorrichtung nach Anspruch 8,
**dadurch gekennzeichnet,**
**dass** zwischen dem Deckelement (20) und dem Bodenelement (12) mindestens ein flächig ausgebildetes Zwischenelement (14) ausgebildet ist.

10. Aufbewahrungsvorrichtung nach Anspruch 9,
**dadurch gekennzeichnet,**
**dass** in dem Zwischenelement (14) mindestens eine Ausnehmung (22) zur Ausbildung der entsprechenden Vertiefung (46) zur Aufnahme und Aufbewahrung des digitalen Speichermediums (42) ausgebildet ist, wobei die Position der Ausnehmung (22) der Position der Ausnehmung (26) in dem Deckelement (20) entspricht.

11. Aufbewahrungsvorrichtung nach Anspruch 9 oder 10,
**dadurch gekennzeichnet,**
**dass** das Zwischenelement (14) ein erstes Teilelement (16) und ein zweites Teilelement (18) umfasst, wobei im ersten und zweiten Teilelement (16, 18) jeweils mindestens eine Teilöffnung (50, 52) zur Ausbildung der entsprechenden Ausnehmung (22) zur Ausbildung der Vertiefung (46) ausgebildet ist und das erste von dem zweiten Teilelement (16, 18) beabstandet angeordnet ist, derart, dass zwischen den Teilelementen (16, 18) ein Spalt (24) ausgebildet ist.

12. Aufbewahrungsvorrichtung nach einem der Ansprüche 8 bis 11,
**dadurch gekennzeichnet,**
**dass** in dem Deckelement (20) und/oder dem Bodenelement (12) mindestens eine Knicklinie (32, 30) zur Ausbildung der Knicklinie (48) des Aufbewahrungskörpers (44) ausgebildet sind.

13. Aufbewahrungsvorrichtung nach Anspruch 12,
**dadurch gekennzeichnet,**
**dass** der Spalt (24) derart angeordnet ist, dass die Knicklinie (32) und/oder die Knicklinie (30) im Bereich des Spalts (24) verlaufen.

14. Aufbewahrungsvorrichtung nach einem der vorhergehenden Ansprüche,
**dadurch gekennzeichnet,**
**dass** im Bereich der Vertiefung (46) mindestens eine Durchgriffsöffnung und/oder mindestens eine Ausstanzung ausgebildet ist.

15. Aufbewahrungsvorrichtung nach einem der vorhergehenden Ansprüche,
**dadurch gekennzeichnet,**
**dass** die Aufbewahrungsvorrichtung (10) die Form und Größe einer handelsüblichen Kreditkarte aufweist.
